# FASCICULE DE BREVET EUROPEEN

(11) **EP 2 385 265 B1**
(45) Date de publication et mention de la délivrance du brevet: **09.01.2013**
(21) Numéro de dépôt: 11164681.6
(22) Date de dépôt: 03.05.2011
(51) Int. Cl.: F16D 43/10

(54) **Dispositif d'accouplement entre un arbre et une poulie et bloc moteur pouvant équiper un véhicule automobile et comprenant le dispositif d'accouplement**
Kupplungsanordnung zwischen einer Welle und einer Laufrolle, Motorblock mit dieser Kupplungsanordnung für ein Fahrzeug,
Clutch device between a shaft and a pulley and motor bloc suitable for a car with this clutch device

(30) Priorité: 03.05.2010 FR 1053404
(43) Date de publication de la demande: 09.11.2011
(73) Titulaire: Peugeot Citroën Automobiles SA, 78140 Vélizy-Villacoublay (FR)
(72) Inventeur: Wascheul, Michaël, 78260 Achères (FR); Giannoni, Marc, 75009 Paris (FR); Le Lièvre, Armel, 78360 Montesson (FR); Berger, Julien, 75005 Paris (FR)

(56) Documents cités:
- EP-A2- 1 847 412
- DE-A1-102004 012 790
- DE-B- 1 024 294
- GB-A- 270 080
- US-A- 2 016 643
- US-A- 2 107 341
- US-A1- 2002 148 701

## Description

L'invention concerne un dispositif d'accouplement entre un arbre et une poulie ainsi qu'un bloc moteur pouvant équiper un véhicule automobile et comprenant le dispositif d'accouplement.

Les véhicules automobiles comprennent généralement plusieurs accessoires nécessitant un apport énergétique pour leur fonctionnement. L'énergie peut être apportée par le réseau électrique du véhicule ou directement par la motorisation du véhicule en amont de la boite de vitesse. A titre d'exemple, le moteur thermique du véhicule peut entraîner un groupe de climatisation par l'intermédiaire d'une courroie souvent appelée courroie d'accessoires. Le groupe de climatisation comprend généralement un compresseur à piston entrainé par la rotation d'un arbre. L'apport d'énergie mécanique du moteur thermique à l'arbre du groupe de climatisation permet d'éviter l'utilisation d'un moteur électrique dédié à l'entraînement du groupe de climatisation.

Par ailleurs, la courroie d'accessoires associée au moteur thermique entraine généralement une machine électrique utilisée comme alternateur permettant la fourniture d'énergie au réseau électrique du véhicule. Cette machine électrique peut être réversible et, dans ce cas, elle est utilisée pour démarrer le moteur thermique. Cette machine est alors appelée alternateur réversible.

On cherche de plus en plus à limiter la consommation de carburant fossile dans les véhicules automobiles. A cet effet, on développé des véhicules hybrides mettant en oeuvre une double motorisation, comme par exemple un moteur thermique et un moteur électrique alimenté par des batteries équipant le véhicule. Le moteur électrique est utilisé tant que la charge des batteries le permet. Cette double motorisation pose un problème pour l'apport énergétique aux accessoires tel que le groupe de climatisation lorsque ceux-ci sont entrainés par la courroie d'accessoires. En effet, l'entraînement par courroie ne peut se faire que si le moteur thermique est en fonctionnement. Le groupe de climatisation se trouve donc à l'arrêt lorsque le véhicule hybride est propulsé par son moteur électrique.

La demanderesse a cherché à entraîner le compresseur de climatisation par l'alternateur réversible lorsque le moteur thermique est à l'arrêt en plaçant une poulie débrayable sur le vilebrequin du moteur thermique, la courroie d'accessoires étant montée sur cette poulie qui permet d'interdire l'entraînement du moteur thermique par la poulie lorsque celle-ci tourne à une vitesse de rotation inférieure à une vitesse de rotation donnée pour que l'alternateur puisse entraîner le groupe de climatisation. Cette poulie permet l'entraînement du moteur thermique par la poulie lorsque celle-ci tourne à une vitesse de rotation supérieure à la vitesse de rotation donnée pour permettre le démarrage du moteur thermique. Cette poulie comprend un embrayage centrifuge actionné par plusieurs masselottes pouvant se déplacer radialement par rapport à l'axe du vilebrequin lors de la rotation de la poulie et générant un effort d'accouplement de l'embrayage.

La fabrication en série des masselottes entraine immanquablement des variations de masses entre elles, ainsi que des forces de frottement différentes. Ces variations, même faibles, entrainent à l'intérieur d'une poulie un décalage dans le déplacement radial des différentes masselottes. Ce décalage génère un broutement lors de l'accouplement ou du désaccouplement de l'embrayage ainsi qu'un balourd dans la rotation de la poulie. Ces défauts dans le fonctionnement dynamique de la poulie entrainent une usure prématurée de la courroie prenant appui sur la poulie ainsi que de la poulie elle-même. Dans la poulie, le broutement peut entraîner une casse de disques de l'embrayage. Le balourd peut user prématurément des paliers à roulement de la poulie.

Il serait possible de calibrer les masselottes pour limiter les écarts de masse entre elle. Mais cette solution augmente le coût de fabrication de la poulie. Il est connu du document US2016643 un embrayage centrifuge classique, dans lequel la vitesse de rotation de l'arbre central conditionne l'entrainement ou non d'une cage périphérique, qui comporte des masselottes présentant une liaison avec la masselotte voisine, sous la forme d'un tenon imbriqué dans une mortaise, impropre à résoudre la problématique soulevée.

L'invention vise à améliorer le fonctionnement dynamique de la poulie en proposant des moyens pour permettre le mouvement simultané des masselottes même si celle-ci ont des masses ou des forces de frottement différentes.

A cet effet, l'invention a pour objet un dispositif d'accouplement entre un arbre et une poulie pouvant tourner l'un par rapport à l'autre autour d'un axe, la poulie étant située autour de l'arbre, caractérisé en ce qu'il comprend des moyens débrayables autonomes d'entraînement de l'arbre par la poulie permettant d'interdire l'entraînement de l'arbre par la poulie lorsque celle-ci tourne à une vitesse de rotation inférieure à une vitesse de rotation donnée et permettant l'entraînement de l'arbre par la poulie lorsque celle-ci tourne à une vitesse de rotation supérieure à la vitesse de rotation donnée et en ce que les moyens débrayables autonomes d'entraînement comprennent :
- un embrayage permettant l'accouplement de l'arbre par rapport à la poulie sous l'effet d'un effort d'accouplement,
- plusieurs masses inertielles pouvant se déplacer radialement par rapport à l'axe lors de la rotation de la poulie et générant l'effort d'accouplement,
- et des moyens de liaison entre les masses inertielles comportant des épaulements en appui deux à deux, permettant à chaque masse inertielle d'entraîner une de ses voisines lors de son écartement radial.

Dans une variante, les épaulements coopérants sont conformés pour présenter l'un par rapport à l'autre une zone de contact linéaire.

Dans une autre variante, les épaulements coopérants sont conformés pour présenter l'un par rapport à l'autre une zone de contact constituée de contacts ponctuels.

De préférence, les épaulements restent en appui deux à deux pendant l'intégralité du déplacement des masses inertielles.

De préférence, on prévoit des moyens de rappel tendant à ramener les masses inertielles vers l'arbre. Il peut notamment s'agir d'un ressort, ou de tout autre dispositif élastique, et/ou d'aimants.

L'effort d'accouplement peut être axial et transmis de la masse inertielle vers l'embrayage au moyen d'un plateau conique sur lequel les masses inertielles prennent appui lors de leur déplacement radial. Les termes radial et axial s'entendent par rapport à l'axe de rotation de la poulie.

L'embrayage est avantageusement conique. Cette disposition permet de transmettre un couple important dans un faible volume.

Afin d'augmenter encore le couple transmis par l'embrayage, il comprend plusieurs cônes de friction répartis en deux ensembles alternés, un premier ensemble étant lié en rotation à la poulie et un second ensemble étant lié en rotation à l'arbre.

L'invention a également pour objet un bloc moteur pouvant équiper un véhicule automobile et comprenant un moteur thermique, un alternateur réversible permettant le démarrage du moteur thermique et la génération d'énergie électrique, un accessoire, comme par exemple un groupe de climatisation, le moteur thermique et l'alternateur réversible pouvant entraîner l'accessoire en rotation au moyen d'une courroie. Le bloc moteur comprend un dispositif d'accouplement selon l'invention entre un arbre de sortie du moteur thermique et une poulie entrainée par la courroie.

L'invention sera mieux comprise et d'autres avantages apparaîtront à la lecture de la description détaillée d'un mode de réalisation donné à titre d'exemple, description illustrée par le dessin joint dans lequel :
- la figure 1 représente la courroie d'accessoires d'un véhicule automobile et plusieurs éléments reliés par cette courroie ;
- la figure 2 représente en coupe un dispositif d'accouplement débrayable entre une poulie entrainée par la courroie d'accessoires et un arbre ; la figure 2 est coupée dans un plan contenant l'axe de la poulie
- la figure 3 représente en perspective et en vue éclatée, un dispositif d'accouplement débrayable
- la figure 4 représente en perspective trois masses inertielles permettant l'accouplement du dispositif ainsi que des moyens de liaison entre ces trois masses inertielles selon un deuxième mode de réalisation de l'invention.
- les figures 5a, 5b, 5c et 5d représentent en coupe la forme des épaulements coopérant selon des variantes du deuxième mode de réalisation de l'invention.
- La figure 6 représente un mode de réalisation particulier de l'invention.

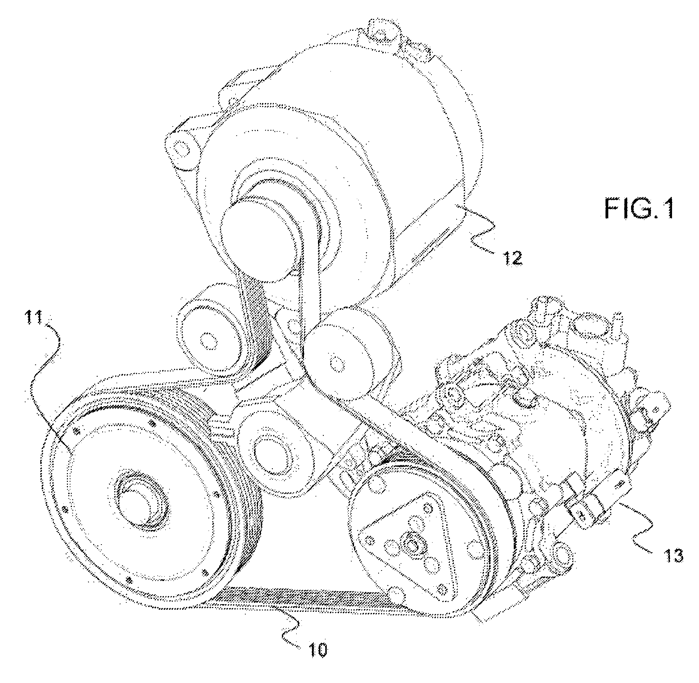

La figure 1 représente une courroie d'accessoires 10 d'un véhicule automobile et plusieurs éléments reliés par la courroie 10. Le véhicule automobile comprend un moteur thermique et une poulie 11 disposée en bout de vilebrequin du moteur thermique. Parmi les éléments entrainés par la courroie 10, un alternateur réversible 12 et un groupe de climatisation 13 sont représentés sur la figure 1. Il est bien entendu que d'autres accessoires peuvent être entrainés par la courroie 10.

De façon classique, l'alternateur réversible 12 peut être utilisé comme démarreur pour lancer le moteur thermique ou comme alternateur pour alimenter un réseau électrique du véhicule. Pour ces deux utilisations, l'alternateur réversible 12 et le moteur thermique sont accouplés en permanence. A cet effet, la poulie 11 est simplement solidaire du vilebrequin.

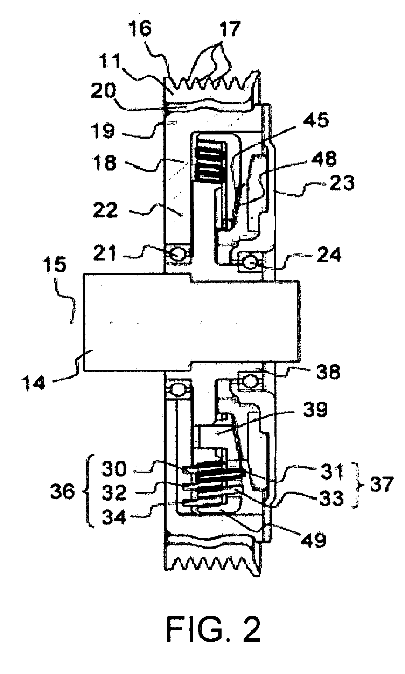

L'invention permet une autre utilisation de l'alternateur réversible 12 pour transmettre une puissance mécanique par la courroie 10 même lorsque le moteur thermique est à l'arrêt. A cet effet, la poulie 11 est débrayable. La figure 2 représente en coupe, un dispositif d'accouplement de la poulie 11. Cette figure permet de visualiser des moyens autonomes et débrayables d'entraînement du vilebrequin par la courroie 10. Une extrémité libre du vilebrequin forme un arbre 14 mobile en rotation autour d'un axe 15. La poulie 11 peut soit tourner librement par rapport à l'arbre 14 soit être solidaire de celui-ci. L'invention prévoit des moyens débrayables d'entraînement de l'arbre 14 par la poulie 11. Ces moyens sont autonomes. La liaison en rotation entre la poulie 11 et l'arbre 14 est obtenue pour une vitesse de rotation de la poulie 11 autour de l'axe 15 supérieure à une vitesse donnée. En dessous de cette vitesse, la poulie 11 est libre en rotation par rapport à l'arbre 14. On peut alimenter l'alternateur réversible 12 pour qu'il entraine la poulie 11 par l'intermédiaire de la courroie 10 à une vitesse supérieure à la vitesse donnée et obtenir ainsi le démarrage du moteur thermique. On peut aussi alimenter l'alternateur réversible 12 de telle sorte que la vitesse de rotation de la poulie 11 soit inférieure à la vitesse donnée pour conserver la poulie 11 libre en rotation par rapport l'arbre 14 et ne pas démarrer le moteur thermique. Aucune action extérieure n'est nécessaire pour obtenir l'accouplement ou le désaccouplement de l'arbre 14 et de la poulie 11. La seule rotation de la poulie 11 permet l'accouplement ou le désaccouplement. La vitesse de rotation donnée est par exemple de 1500 tours par minute (soit 167 radians par seconde en unité du système international). En dessous de cette vitesse, le moteur thermique n'est pas accouplé à la poulie 11. En revanche, au dessus de cette vitesse, le vilebrequin et la poulie sont solidaires.

La poulie 11 comprend une surface de révolution 16 destinée à recevoir la courroie 10. Pour augmenter l'énergie mécanique transmissible entre la courroie 10 et la poulie 11, la courroie 10 est avantageusement striée et la surface de révolution 16 comprend plusieurs gorges 17 conformées pour recevoir les stries de la courroie 10. La poulie 11 comprend une jante 18 dont une partie périphérique extérieure 19 est solidaire de la surface 16. On peut disposer entre la partie périphérique extérieure 19 et la surface 16 une cale élastique 20 permettant de filtrer d'éventuels asynchronismes dans la rotation de la poulie 11 ou dans la rotation de l'arbre 14. Un roulement 21 relie une partie centrale 22 de la jante 18 et l'arbre 14. La jante 18 forme une première face latérale de la poulie 11. Une seconde face latérale de la poulie 11 peut être formée par une plaque de fermeture 23 solidaire de la partie périphérique extérieure 19. Un second roulement 24 relie la plaque de fermeture 23 et l'arbre 14. Les deux roulements 21 et 24 forment un palier permettant la rotation de la poulie 11 par rapport l'arbre 14 autour de l'axe 15.

Les moyens autonomes et débrayables d'entraînement de l'arbre 14 par la poulie 11 sont logés dans un espace situé entre la jante 18 et la plaque de fermeture 23. Cet espace est limité radialement par la partie périphérique extérieure 19 de la jante 18. Les moyens autonomes et débrayables d'entraînement comprennent un embrayage permettant l'accouplement de l'arbre 14 par rapport à la poulie 11. L'embrayage est par exemple conique et comprend plusieurs cônes de friction 30 à 34 répartis en deux ensembles alternés. Un premier ensemble 36 comprenant les cônes 30, 32 et 34 est lié en rotation de la jante 18 et un second ensemble 37 comprenant les cônes 31 et 33 est lié en rotation à l'arbre 14 par l'intermédiaire d'un moyeu 38 solidaire de l'arbre 14 et d'un baladeur de poussée 39 permettant la liaison en rotation de l'ensemble 37 par rapport à l'arbre 14 autour de l'axe 15, tout en laissant subsister un degré de liberté en translation suivant l'axe 15. Ce degré de liberté en translation permet aux deux ensembles 36 et 37 de venir en pression l'un contre l'autre afin d'assurer une transmission de puissance entre l'arbre 14 et la poulie 11. Afin d'assurer un coefficient de frottement élevé entre les deux ensembles 36 et 37, les cônes 30 à 34 peuvent être réalisés ou revêtus de carbone.

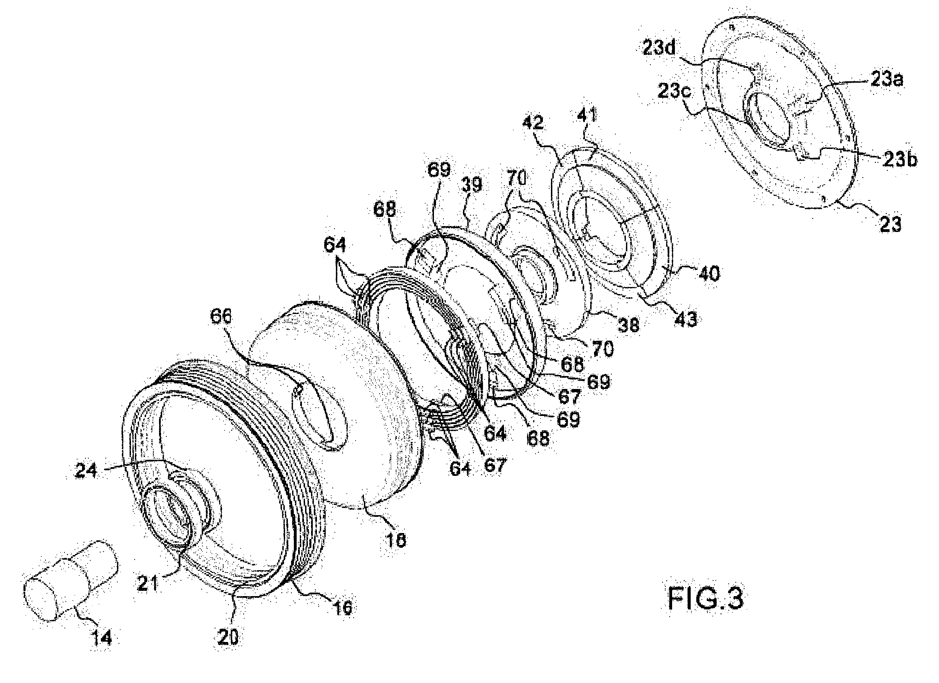

Les moyens autonomes et débrayables d'entraînement comprennent plusieurs masses inertielles pouvant se déplacer radialement par rapport à l'axe 15 lors de la rotation de la poulie 11. Dans l'exemple représenté, quatre masses inertielles 40 à 43 sont présentes et sont visibles sur la figure 3. Les masses 40 à 43 sont réparties radialement autour de l'axe 13. Les masses inertielles 40 à 43 sont entrainées en rotation par la poulie 11 par l'intermédiaire de la plaque de fermeture 23 autour de l'axe 15. Lors de la rotation de la poulie 11, les masses 40 à 43 se déplacent en translation radialement par rapport à l'axe 15 jusqu'à venir au contact d'un plateau 45 de révolution autour de l'axe 15 et appartenant au baladeur de poussée 39. Les masses 40 à 43 sont toutes sensiblement identiques, à leurs tolérances de réalisation près. Elles se déplacent sensiblement simultanément sous l'effet de la rotation de la poulie 11. Le baladeur de poussée 39 est libre translation suivant l'axe 15. Le baladeur de poussée 39 est guidé dans son mouvement par la partie périphérique extérieure 19 de la jante 18. Le plateau 45 forme une surface conique sur laquelle prend appui une autre surface conique 48 appartenant à chacune des masses inertielles 40 à 43. Cet appui entre les deux surfaces coniques 45 et 48 permet de transformer l'effort radial que les masses 40 à 43 exercent lors de leur mouvement en effort axial permettant l'accouplement de l'arbre 14 et de la poulie 11.

Le dispositif peut comprendre un ressort de rappel, non représenté et s'opposant à l'effort axial pour maintenir l'embrayage désaccouplé lorsque la vitesse de rotation de la poulie 11 est inférieure à la vitesse de rotation donnée.

Le baladeur de poussée 39 comprend une surface conique 49 destinée à prendre appui contre le cône de friction 34. Lorsque l'effort exercé par les masses inertielles 40 à 43 sur le plateau conique 45 est suffisant pour comprimer le ressort les cônes de friction 30 à 34 viennent en pression les uns contre les autres de façon à accoupler la poulie 11 et l'arbre 14.

Le dispositif comprend des moyens de liaison entre les masses inertielles 40, 41, 42 et 43 permettant à une des masses inertielles d'entraîner au moins une de ses voisines lors de leur mouvement radial.

La figure 3 représente en perspective et en vue éclatée, le dispositif d'accouplement débrayable. Sur cette figure, on distingue plus particulièrement l'entraînement en rotation des cônes 30, 32 et 34 par la jante 18. Chacun des cônes 30, 32 et 34 dispose de plusieurs doigts 64 coopérant avec des rainures 66 radiales réalisées dans la jante 18. De même, des doigts 67 sont réalisés dans les cônes 31 et 33. Les doigts 67 coopèrent avec des ouvertures 68 du baladeur de poussée 39. Le moyeu 38, solidaire de l'arbre 14, est lié en rotation avec le baladeur de poussée 39 par l'intermédiaire de doigts 69 du baladeur de poussée 39 coopérant avec des ouvertures 70 du moyeu 38. Les cônes 31 et 33 sont liés en rotation avec le moyeu 38 par l'intermédiaire du baladeur de poussée 39. Pour un même cône, les doigts sont régulièrement répartis autour de l'axe 13. Il est de même pour les rainures 66 et les ouvertures 68 ainsi que pour les doigts 69 et les ouvertures 70. Les masses inertielles 40 à 43 sont entrainées en rotation par la plaque de fermeture 23 au moyen de butées radiales 23a, 23b, 23c et 23d réalisées de façon proéminente dans la plaque de fermeture 23. Chacune des masses inertielles 40 à 43 est guidée dans son déplacement radial entre deux de ces butées radiales. Par exemple la masse 41 peut se déplacer radialement le long de la plaque de fermeture 23 en restant cantonnée entre les butées radiales 23a et 23d.

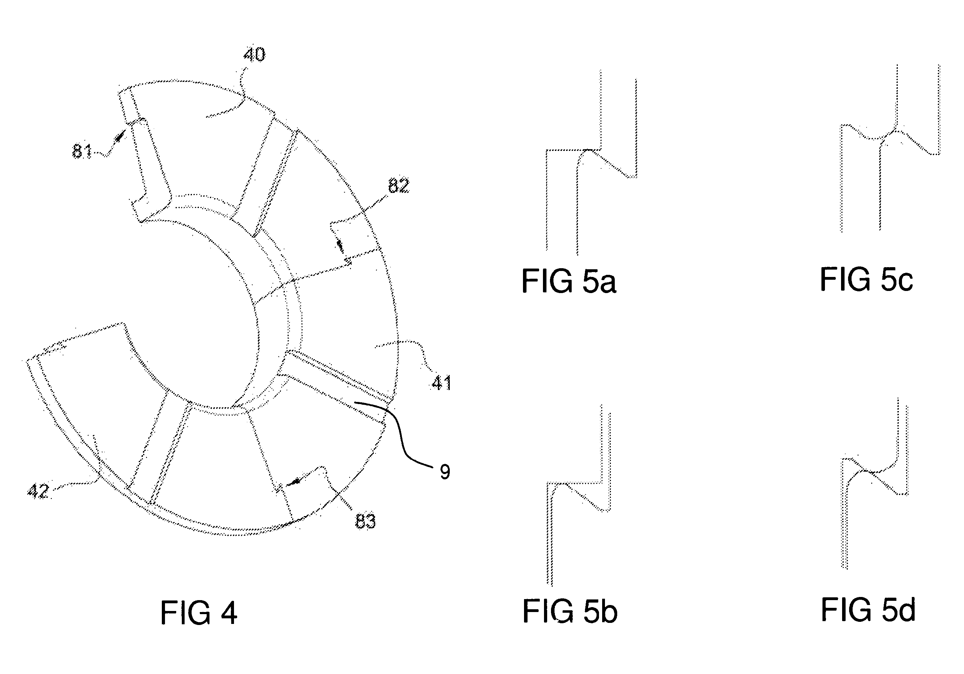

La figure 4 représente en perspective trois masses inertielles permettant l'accouplement du dispositif ainsi que les moyens de liaison entre ces trois masses inertielles selon l'invention.

Selon l'invention, chaque masse présente des épaulements 81, 82, ..., coopérant deux à deux, de sorte que le mouvement d'écartement radial d'une masse inertielle entraîne le mouvement d'une de ses voisines.

Dans la variante ici représentée, chaque masse présente une rainure de guidage radial 9.

Une légère différence de masse entre deux masses inertielles peut conduire à un déplacement différent d'une des masses par rapport aux autres. Lorsque la vitesse de rotation de l'arbre 14 augmente, la masse la plus lourde tend à décoller la première. Du fait des épaulements créant un appui entre chaque masse inertielle 40, 41, 42 et 43 avec l'une de ses voisines et du guidage radial, cette masse la plus lourde entraîne sa voisine qui elle-même entraîne son autre voisine, et ainsi de suite, de sorte que toutes les masses inertielles 40 à 40 s'écartent simultanément.

Les figures 5a, 5b, 5c et 5d représentent en coupe la forme des épaulements coopérant selon l'invention. La forme des épaulements coopérant l'un par rapport à l'autre permet de limiter et répartir les zones de contact, afin de limiter les frottements. Selon une première variante simple à mettre en oeuvre (figure 5a et 5b) les zones de contact sont réduites, tandis qu'un seconde variante (figure 5b et 5c) permet en outre d'élargir la zone de contact utile des épaulements, permettant aux masses inertielles un plus grand écartement relatif tout en restant en contact au niveau des épaulements, tout en limitant les frottements au niveau de la zone de contact.

Que l'on mette en oeuvre l'une ou l'autre des variantes de réalisation des épaulements, on obtient, vu en coupe, un contact ponctuel entre les épaulements. Cela correspond à un contact linéaire entre les deux épaulements, ou, à une zone de contact constituée de plusieurs contacts ponctuels.

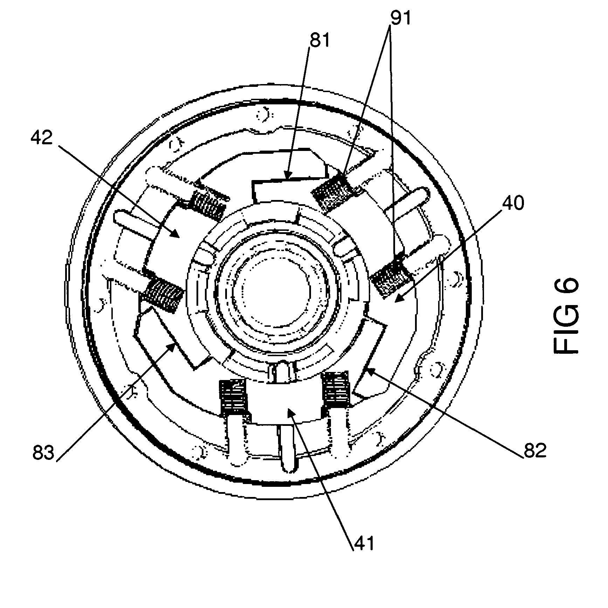

La figure 6 présente un mode de réalisation de l'invention dans lequel les épaulements sont conformés de sorte à rester en appui deux à deux pendant l'intégralité du déplacement des masses inertielles. Les épaulements présentent donc notamment une largeur adaptée. Dans le mode de réalisation ici représenté, il y a 3 masses inertielles, ce qui permet un coût de réalisation faible.

La figure 6 montre également des moyens de rappel tendant à ramener les masse inertielles (40, 41, 42) vers l'arbre (15), à savoir dans l'exemple représenté deux ressort 91 par masse inertielle.

## Revendications

1. Dispositif d'accouplement entre un arbre (14) et une poulie (11) pouvant tourner l'un par rapport à l'autre autour d'un axe (15), la poulie (11) étant située autour de l'arbre (14), **caractérisé en ce qu'**il comprend des moyens débrayables autonomes (36, 37, 38, 39, 40, 41, 42, 43) d'entraînement de l'arbre (14) par la poulie (11) permettant d'interdire l'entraînement de l'arbre (14) par la poulie (11) lorsque celle-ci tourne à une vitesse de rotation inférieure à une vitesse de rotation donnée et permettant l'entraînement de l'arbre (14) par la poulie (11) lorsque celle-ci tourne à une vitesse de rotation supérieure à la vitesse de rotation donnée, **en ce que** les moyens débrayables autonomes d'entraînement comprennent :
• un embrayage (36, 37) permettant l'accouplement de l'arbre (14) par rapport à la poulie (11) sous l'effet d'un effort d'accouplement,
• plusieurs masses inertielles (40, 41, 42, 43) pouvant se déplacer radialement par rapport à l'axe (15) lors de la rotation de la poulie (11) et générant l'effort d'accouplement,
• et des moyens de liaison entre les masses inertielles (40, 41, 42, 43) comprenant des épaulements en appui deux à deux (81, 82, 83), permettant à chaque masse inertielle (40, 41, 42, 43) d'entraîner une de ses voisines lors de son écartement radial.

2. Dispositif selon la revendication 1, **caractérisé en ce que** les épaulements en appui (81, 82, 83) sont conformés pour présenter l'un par rapport à l'autre une zone de contact linéaire.

3. Dispositif selon la revendication 1, **caractérisé en ce que** les épaulements en appui (81, 82, 83) sont conformés pour présenter l'un par rapport à l'autre une zone de contact constituée de contacts ponctuels.

4. Dispositif selon l'une des revendications précédentes, **caractérisé en ce que** les épaulements restent en appui deux à deux pendant l'intégralité du déplacement des masses inertielles.

5. Dispositif selon l'une des revendications précédentes, **caractérisé par** des moyens de rappel tendant à ramener les masse inertielles (40, 41, 42, 43) vers l'arbre (15).

6. Dispositif d'accouplement selon l'une des revendications précédentes, **caractérisé en ce que** l'effort d'accouplement est axial et transmis de la masse inertielle (40, 41, 42, 43) vers l'embrayage (36, 37) au moyen d'un plateau conique (45) sur lequel les masses inertielles (40, 41, 42, 43) prennent appui lors de leur déplacement radial.

7. Dispositif d'accouplement selon l'une des revendications précédentes, **caractérisé en ce que** l'embrayage (36, 37) est conique.

8. Dispositif d'accouplement selon la revendication 7, **caractérisé en ce que** l'embrayage (36, 37) comprend plusieurs cônes de friction (30 à 35) répartis en deux ensembles alternés (36, 37), un premier ensemble (36) étant lié en rotation à la poulie (11) et un second ensemble (37) étant lié en rotation à l'arbre (14).

9. Bloc moteur pouvant équiper un véhicule automobile et comprenant un moteur thermique, un alternateur réversible (12) permettant le démarrage du moteur thermique et la génération d'énergie électrique, un accessoire (13), le moteur thermique et l'alternateur réversible (12) pouvant entraîner l'accessoire (13) en rotation au moyen d'une courroie (10), **caractérisé en ce qu'**il comprend un dispositif d'accouplement selon l'une des revendications précédentes entre un arbre (14) de sortie du moteur thermique et une poulie (11) entrainée par la courroie (10).

10. Bloc moteur selon la revendication 9, **caractérisé en ce que** l'accessoire est un groupe de climatisation (13).

## Claims

1. A coupling device between a shaft (14) and a pulley (11) being able to turn one with respect to the other about an axis (15), the pulley (11) being situated around the shaft (14), **characterized in that** it includes autonomous disengageable means (36, 37, 38, 39, 40, 41, 42, 43) for driving the shaft (14) by the pulley (11) permitting the driving of the shaft (14) by the pulley (11) to be prohibited when the latter turns at a rotation speed lower than a given rotation speed and permitting the driving of the shaft (14) by the pulley (11) when the latter turns at a rotation speed greater than the given rotation speed, **in that** the autonomous disengageable driving means include:
■ a clutch (36, 37) permitting the coupling of the shaft (14) with respect to the pulley (11) under the effect of a coupling force,
■ several inertial masses (40, 41, 42, 43) being able to move radially with respect to the axis (15) on the rotation of the pulley (11) and generating the coupling force,
■ and connecting means between the inertial masses (40, 41, 42, 43) including shoulders in abutment in pairs (81, 82, 83), permitting each inertial mass (40, 41, 42, 43) to drive one of its neighbours on its radial separation.

2. The device according to Claim 1, **characterized in that** the shoulders in abutment (81, 82, 83) are shaped to present one with respect to the other a linear contact zone.

3. The device according to Claim 1, **characterized in that** the shoulders in abutment (81, 82, 83) are shaped to present one with respect to the other a contact zone constituted by punctiform contacts.

4. The device according to one of the preceding claims, **characterized in that** the shoulders remain in abutment in pairs during the whole of the movement of the inertial masses.

5. The device according to one of the preceding claims, **characterized by** return means tending to bring back the inertial masses (40, 41, 42, 43) towards the shaft (15).

6. The coupling device according to one of the preceding claims, **characterized in that** the coupling force is axial and transmitted from the inertial mass (40, 41, 42, 43) towards the clutch (36, 37) by means of a conical plate (45) on which the inertial masses (40, 41, 42, 43) rest during their radial displacement.

7. The coupling device according to one of the preceding claims, **characterized in that** the clutch (36, 37) is conical.

8. The coupling device according to Claim 7, **characterized in that** the clutch (36, 37) includes several friction cones (30 to 35) distributed in two alternate sets (36, 37), a first set (36) being linked in rotation to the pulley (11) and a second set (37) being linked in rotation to the shaft (14).

9. An engine block able to equip a motor vehicle and including a heat engine, a reversible alternator (12) permitting the starting up of the heat engine and the generation of electrical energy, an accessory (13), with the heat engine and the reversible alternator (12) being able to drive the accessory (13) in rotation by means of a belt (10), **characterized in that** it includes a coupling device according to one of the preceding claims between an output shaft (14) of the heat engine and a pulley (11) driven by the belt (10).

10. The engine block according to Claim 9, **characterized in that** the accessory is an air-conditioning unit (13).

## Patentansprüche

1. Kupplungsanordnung zwischen einer Welle (14) und einer Laufrolle (11), die zueinander um eine Achse (15) drehen können, wobei die Laufrolle (11) um die Welle (14) liegt, **dadurch gekennzeichnet, dass** sie autonome auskuppelbare Mittel (36, 37, 38, 39, 40, 41, 42, 43) zum Antreiben der Welle (14) durch die Laufrolle (11) aufweist, die es erlauben, das Antreiben der Welle (14) durch die Laufrolle (11) zu verbieten, wenn diese mit einer Drehzahl dreht, die kleiner ist als eine gegebene Drehzahl, und die das Antreiben der Welle (14) durch die Laufrolle (11) erlauben, wenn diese mit einer Drehzahl dreht, die größer ist als die gegebene Drehzahl, dass die autonomen auskuppelbaren Antriebsmittel aufweisen:
- eine Kupplung (36, 37), die das Kuppeln der Welle (14) mit der Scheibe (11) unter der Wirkung einer Kupplungskraft erlaubt,
- mehrere Trägheitsmassen (40, 41, 42, 43), die sich radial in Bezug zu der Achse (15) bei der Drehung der Laufrolle (11) verlagern können und eine Kupplungskraft erzeugen,
- und Verbindungsmittel zwischen den Trägheitsmassen (40, 41, 42, 43), die Ansätze in Auflage zu je zwei (81, 82, 83) aufweisen, die es jeder Trägheitsmasse (40, 41, 42, 43) erlauben, eine ihrer Nachbarinnen bei ihrer radialen Abspreizung anzutreiben.

2. Anordnung nach Anspruch 1, **dadurch gekennzeichnet, dass** die Ansätze in Auflage (81, 82, 83) ausgebildet sind, um zueinander eine lineare Berührungszone aufzuweisen.

3. Anordnung nach Anspruch 1, **dadurch gekennzeichnet, dass** die Ansätze in Auflage (81, 82, 83) ausgebildet sind, um zueinander eine Berührungsfläche zu bilden, die aus stellenweisen Kontakten besteht.

4. Anordnung nach einem der vorhergehenden Ansprüche, **dadurch gekennzeichnet, dass** die Ansätze zu je zwei während der gesamten Bewegung der Trägheitsmassen in Auflage bleiben.

5. Anordnung nach einem der vorhergehenden Ansprüche, **gekennzeichnet durch** Rückstellmittel, die dazu tendieren, die Trägheitsmassen (40, 41, 42, 43) zu der Welle (15) zurückzustellen.

6. Kupplungsanordnung nach einem der vorhergehenden Ansprüche, **dadurch gekennzeichnet, dass** die Kupplungskraft axial ist und von der Trägheitsmasse (40, 41, 42, 43) zu der Kupplung (36, 37) mittels einer kegelförmigen Platte (45) übertragen wird, auf die sich die Trägheitsmassen (40, 41, 42, 43) bei ihrer radialen Bewegung stützen.

7. Kupplungsanordnung nach einem der vorhergehenden Ansprüche, **dadurch gekennzeichnet, dass** die Kupplung (36, 37) kegelförmig ist.

8. Kupplungsanordnung nach Anspruch 7, **dadurch gekennzeichnet, dass** die Kupplung (36, 37) mehrere Reibungskegel (30 bis 35) aufweist, die in zwei abwechselnden Einheiten (36, 37) verteilt sind, wobei eine erste Einheit (36) in Drehung mit der Laufrolle (11) verbunden ist und eine zweite Einheit (37) in Drehung mit der Welle (14) verbunden ist.

9. Motorblock, der ein Kraftfahrzeug ausstatten kann und einen Verbrennungsmotor, eine umkehrbare Lichtmaschine (12), die das Anlassen des Verbrennungsmotors und die Erzeugung von elektrischem Strom erlaubt, ein Zubehör (13) aufweist, wobei der Verbrennungsmotor und die umkehrbare Lichtmaschine (12) das Zubehör (13) in Drehung mittels eines Riemens (10) antreiben können, **dadurch gekennzeichnet, dass** er eine Kupplungsvorrichtung nach einem der vorhergehenden Ansprüche zwischen einer Ausgangswelle (14) des Verbrennungsmotors und einer Laufrolle (11), die von dem Riemen (10) angetrieben wird, aufweist.

10. Motorblock nach Anspruch 9, **dadurch gekennzeichnet, dass** das Zubehör eine Klimaanlage (13) ist.
